# EUROPÄISCHE PATENTSCHRIFT

(11) **EP 4 107 837 B1**
(45) Veröffentlichungstag und Bekanntmachung des Hinweises auf die Patenterteilung: **25.03.2026**
(21) Anmeldenummer: 21710879.4
(22) Anmeldetag: 19.02.2021
(51) Int. Cl.: H02J 3/38, H02J 13/00

(54) **VERFAHREN ZUR ERMITTLUNG VON PARAMETERN EINER ODER MEHRERER ENERGIEWANDLUNGSANLAGEN**
METHOD FOR CALCULATING PARAMETERS OF ONE OR MORE ENERGY CONVERSION SYSTEMS
PROCÉDÉ DE CALCUL DE PARAMÈTRES D'UN OU PLUSIEURS SYSTÈMES DE CONVERSION D'ÉNERGIE

(30) Priorität: 20.02.2020 DE 102020104516
(43) Veröffentlichungstag der Anmeldung: 28.12.2022
(73) Patentinhaber: DieEnergiekoppler GmbH, 01307 Dresden (DE)
(72) Erfinder: WERNER, Jens, 01307 Dresden (DE); SEIFERT, Joachim, 01189 Dresden (DE); SCHEGNER, Peter, 01259 Dresden (DE); SEIDEL, Paul, 04357 Leipzig (DE); HESS, Tobias, 01445 Radebeul (DE)
(74) Vertreter: Sperling, Thomas
(86) Internationale Anmeldenummer: PCT/DE2021/100168
(87) Internationale Veröffentlichungsnummer: WO 2021/164827

(56) Entgegenhaltungen:
- WO-A1-2009/020684
- WO-A1-2018/080523

## Beschreibung

Die Erfindung betrifft ein Verfahren zur Ermittlung von Parametern einer oder mehrerer Energiewandlungsanlagen, welches Parameter von einer oder mehreren Energiewandlungsanlagen aus kontinuierlich erfassten Messdaten bestimmt und in einem Anlagenmodell speichert.

Die politisch gewollte und getriebene Energiewende führt zu einer Dezentralisierung der Energiebereitstellung in den Sektoren Strom, Wärme/Kälte und Mobilität. Die Sektoren werden zunehmend gekoppelt durch kleine, steuerbare Energiewandlungsanlagen, wie zum Beispiel Wärmepumpen, Blockheizkraftwerke oder Elektrofahrzeuge. Die Dezentralisierung führt dazu, dass große konventionelle Kraftwerke abgeschaltet werden.

Weiterhin besteht die Zielstellung der Effizienzerhöhung. Diese Entwicklungen führen dazu, dass zunehmend Energiemanagementsysteme (EMS) installiert werden. Diese Energiemanagementsysteme können lokal an einem oder mehreren Energiewandlungsanlagen oder übergeordnet über einen Verbund von Energiewandlungsanlagen eingesetzt werden. Ein Energiemanagementsystem weist üblicherweise die nachfolgend aufgelisteten Komponenten auf:
- ein oder mehrere Energiewandlungsanlagen, wie beispielsweise Kraft-Wärme-Kopplungsanlagen, Wärmepumpen, Brennstoffzellen, Heizstäbe, Photovoltaik-Anlagen, welche jeweils an ein oder mehrere Versorgungsnetze angeschlossen sein können
- Bedarfe in einem oder mehreren Sektoren, beispielweise Bedarfe an Strom, Wärme, Kälte oder Mobilität
- Speichereinheiten, welche beispielsweise thermische, chemische oder elektrische Speicher sein können
- Sensorik bzw. Zähler zur Erfassung relevanter energetischer Schnittstellen oder Kenngrößen von Energiewandlungsanlagen und Speichern
- eine lokale Steuerungs- und Regelungseinheit, welche zu einzelnen oder zu einer Gruppe an Energiewandlungsanlagen zugeordnet ist und deren Steuerung bzw. Regelung durchführt sowie die Messdaten der Sensoren erfasst

Bei einem sogenannten lokalen Energiemanagementsystem ist einer oder mehreren Energiewandlungsanlagen eine Steuerungs- und Regelungseinheit zugeordnet, auf welcher die Teilfunktionalitäten des Energiemanagementsystem implementiert sind.

Die Steuerungs- und Regelungseinheit ist gekennzeichnet durch mindestens eine Recheneinheit und der Möglichkeit einer Datenspeicherung. Zum Einsatz kommen kann beispielsweise ein Datenbanksystem. Das lokale Energiemanagementsystem optimiert den Betrieb aller angeschlossenen Energiewandlungsanlagen nach verschiedenen Gesichtspunkten unter Beachtung auftretender Bedarfe im System. Derartige Gesichtspunkte können Wirtschaftlichkeit, Energieeffizienz, und andere mehr sein. Hierbei werden die auftretenden Bedarfe im System in einer geeigneten Weise prognostiziert.

Derartige Prognosen erfolgen idealerweise auf Basis gewonnener Messdaten, welche durch installierte Sensoren und Zähler erfasst werden. Außerdem können externe Prognosen wie Wetterprognosen, welche beispielsweise über das Internet über ein Funknetz oder eine DSL-Anbindung empfangen werden für die Prognose genutzt werden. Externe Prognosen können alternativ auch über eine Schnittstelle aus einer Energieleitstelle abgerufen werden.

Zur Anbindung von Sensoren und Zählern weist das Energiemanagementsystem eine zugeordnete Steuerungs- und Regelungseinheit mit entsprechenden Schnittstellen für die Erfassung von Messwerten auf. Erweitert wird der Schnittstellenumfang der Steuerungs- und Regelungseinheit mit mindestens einer Schnittstelle zu einer oder mehreren Energiewandlungsanlagen.

Im Falle eines sogenannten übergeordneten Energiemanagementsystems wird das Energiemanagementsystem durch einen Bestandteil einer Energieleitstelle für die Steuerung der untergeordneten Einheiten ergänzt. Hierfür besitzt entweder die Steuerungs- und Regelungseinheit zusätzlich die Funktionalität eines Gateways oder die Kommunikation erfolgt über ein separates Gateway.

Im Falle eines übergeordneten Energiemanagementsystems koordiniert das Energiemanagementsystem mehrere unterlagerte Systeme, welche wiederum aus einer oder mehreren Energiewandlungsanlagen und einer zugeordneten Steuerungs- und Regelungseinheit bestehen. Die Koordination erfolgt anhand verschiedener Zielgrößen wie beispielsweise Wirtschaftlichkeit, Energieeffizienz, Spitzenlastkappung und anderen mehr. Die Funktion des Energiemanagementsystems basiert auf den durch die Gateways über Schnittstellen erfassten Messdaten, welche durch das Gateway oder die Steuerungs- und Regelungseinheit mit Gateway-Funktionalität an das übergeordnete Energiemanagementsystem weitergeleitet werden. Informationen zur Koordination der einzelnen Energiewandlungsanlagen werden an die Gateways bzw. Steuerungs- und Regelungseinheit übermittelt, welche diese an die Energiewandlungsanlagen übergeben. Diese Informationen zur Koordination können im einfachsten Fall direkte Steuerbefehle, wie AN oder AUS bzw. eine Sollleistung, sein.

Für eine korrekte Funktionsweise eines Energiemanagementsystems bedarf es Informationen zu möglichst vielen Parametern und Kenndaten der zu steuernden Energiewandlungsanlagen. Derartige Informationen beschreiben beispielsweise das Betriebsverhalten der Energiewandlungsanlagen im stationären und **transienten** Zustand sowie externe Einflussfaktoren bzw. Abhängigkeiten. Einige der nachfolgend aufgeführten Beispiele zu den Parametern sind obligatorisch, andere als fakultativ anzusehen. Je genauer das Betriebsverhalten der zu steuernden Energiewandlungsanlagen beschrieben werden kann, desto besser können die Funktionen des Energiemanagementsystems ausgestaltet werden.

Zu diesen Parametern bzw. Kenndaten gehören zum Beispiel:
- Parameter zur Beschreibung des stationären Betriebsverhaltens:
   ∘ die Bemessungsleistungen für alle energetischen Schnittstellen (elektrisch, thermisch, Gas, ...)
   ∘ Schaltstufen für alle energetischen Schnittstellen (elektrisch, thermisch, Gas, ...)
   ∘ Minimale Verweildauer im eingeschalteten Zustand,
   ∘ Minimale Verweildauer im ausgeschalteten Zustand
   ∘ Leistungsfluktuation für die zu vermarktenden energetische Schnittstelle (z.B. elektrische Leistung bei Stromvermarktung)
   ∘ ....
- Parameter zur Beschreibung des transienten Betriebsverhaltens:
   o Anlaufzeitkonstanten, Abschaltzeitkonstanten
   o Erzeugte Energie im Anlauf- und Abschaltprozess für alle energetische Schnittstellen
   ∘ ...
- Externe Einflussfaktoren / Abhängigkeiten:
   o Abhängigkeit Leistungsfluktuation von externen Einflussgrößen (z.B. Außentemperatur)
   ∘ Zeiten mit gesperrtem Betrieb (Nutzervorgaben),
   ∘ Zeiten und Grenzwerte für Nachtabschaltung bei wärmetechnischen Anlagen (Nutzervorgaben)
   ∘ Grenzwerte für die Ein- und Ausschaltung im autonomen Betrieb
   ∘ ...

Diese Parameter werden hierbei für die Einsatzplanung, d.h. die Prognose des zukünftigen Betriebs der Energiewandlungsanlagen, aber auch für die Steuerung bzw. Regelung und die Überwachung des laufenden Betriebs der Energiewandlungsanlagen genutzt. Je mehr Informationen über die Energiewandlungsanlagen vorliegen, desto zuverlässiger kann die Einsatzplanung und der Betrieb der Energiewandlungsanlagen gestaltet werden.

Der Stand der Technik stellt sich so dar, dass diese Parameter in der Regel durch den Hersteller oder bei einer Inbetriebnahme messtechnisch erfasst und in einem Datenblatt der Anlage dokumentiert werden müssen. Dies erfordert einen hohen zeitlichen und personellen Aufwand und verursacht entsprechende Kosten. Durch unterschiedliche Randbedingungen und Messmethoden bei der Inbetriebnahme, ist die Methode zudem sehr fehleranfällig.

Bei der Implementierung des Energiemanagementsystems müssen diese Parameter konfiguriert werden. Im Falle eines lokalen Energiemanagementsystems werden diese Parameter beispielsweise lokal auf dem Gateway hinterlegt, im Falle eines übergeordneten Energiemanagementsystems werden die Parameter in der Energieleitstelle für jede einzelne zu steuernde Energiewandlungsanlage konfiguriert.

Diese Parameter können sich jedoch im Laufe des Betriebs der Energiewandlungsanlagen verändern. So ist es möglich, dass die interne Regelung der Energiewandlungsanlage durch ein Softwareupdate aktualisiert wird, wodurch sich das Betriebsverhalten der Energiewandlungsanlage ändert. Zusätzlich kann der Nutzer der Energiewandlungsanlage Einstellparameter anpassen. Derartige Parameter sind beispielsweise Grenzwert für eine Nachtabschaltung, Sperrzeiten und andere mehr. Bei einem Vorgehen entsprechend dem Stand der Technik müssten in diesem Fall die Auswirkungen der Aktualisierungen bzw. Änderungen analysiert und neue Parameter im Energiemanagementsystem konfiguriert werden. Dies ist wiederum mit hohem personellem und zeitlichem Aufwand verbunden, was die Wirtschaftlichkeit eines Energiemanagementsystems eingrenzt. Ebenso muss der Betreiber des Energiemanagementsystems über die Aktualisierungen bzw. Änderungen von Parametern informiert sein.

Aus dem Stand der Technik sind derartige Energiemanagementsystem in verschiedenen Anwendungsfällen bekannt.
Beispiel 1: Virtuelle Kraftwerke zur Vermarktung der durch erneuerbare Energien eingespeisten Energie an der Strombörse
Beispiel 2: Steuerung eines Batteriespeichers in einem System aus PV-Anlage, Batteriespeicher und elektrischen Verbrauchern zur Erhöhung des Anteils der durch die PV-Anlage produzierten Energie am im System verbrauchter Energie (Eigenbedarfsdeckung)
Beispiel 3: Anbindung und Pooling (Gruppierung) von Blockheizkraftwerken (Kraft-Wärme-Kopplungsanlagen) zur Gewährleistung der notwendigen Mindestleistung für die Bereitstellung von Regelleistung als Systemdienstleistung im Rahmen eines Virtuellen Kraftwerks

Als Stand der Technik werden die nachfolgend benannten Dokumente angegeben:
- DE 10 2009 044 161 A1
- DE 10 2005 056 084 A1
- US 2009 / 0088907 A1
- Hess, T.; Werner, J.; Schegner, P.: Konzepte für ein sektorenübergreifendes Energiemanagement, ETG Kongress 2019
- Seifert, J.; Werner, J.; Seidel, P.; u. a.: RVK II - Praxiserprobung des Regionalen Virtuellen Kraftwerks auf Basis der Mikro-KWK-Technologie, ISBN 978-3-8007-4630-9
- BTC AG: Broschüre BTC Virtual Power Plant - Verbraucher und Erzeuger bündeln und vermarkten, https://www.btc-ag.com/Angebote/BTC-VPP-Virtual-Power-Plant (Abrufdatum 03.07.2019)

Weiterhin ist aus der WO 2009 / 020684 A1 ein in Echtzeit arbeitendes Vorhersagesystem zur intelligenten Energieüberwachung und Verwaltung von Stromnetzen bekannt. Die WO 2009 / 020684 A1 bezieht sich allgemein auf die Computermodellierung und -verwaltung von Systemen und insbesondere auf ein Energieverwaltungssystem zum Überwachen und Verwalten von Kosten, Qualität und Zuverlässigkeit eines elektrischen Energiesystems. Das beschriebene System umfasst eine Datenerfassungskomponente, einen Leistungsanalyseserver und ein Client-Terminal. Die Datenerfassungskomponente erfasst Echtzeitdaten, die von dem elektrischen System ausgegeben werden. Der Power Analytics-Server besteht aus einer Echtzeit-Energiepreis-Engine, einer virtuellen Systemmodellierungs-Engine, einer Analyse-Engine, einer maschinellen Lern-Engine und einer schematischen Benutzeroberflächen-Erstellungs-Engine. Die Echtzeit-Energiepreis-Engine generiert Echtzeit-Strompreisdaten für Versorgungsunternehmen. Die Modellierungsmaschine für virtuelle Systeme erzeugt eine vorhergesagte Datenausgabe für das elektrische System. Die Analyse-Engine überwacht die Echtzeit-Datenausgabe und die prognostizierte Datenausgabe des elektrischen Systems. Die Maschine für maschinelles Lernen speichert und verarbeitet Muster, die von der Echtzeit-Datenausgabe und der vorhergesagten Datenausgabe beobachtet werden, um einen Aspekt des elektrischen Systems vorherzusagen.

Die WO 2018 / 080523 A1 beschriebt eine Implementierungen zum Erkennen von Ähnlichkeit zwischen anomalen Ereignissen, die derzeit auftreten oder zuvor in Übertragungsleistungssystemen aufgetreten sind, basierend auf Phasor-Management-Unit(PMU)-Daten, um Informationen für Netzbetreiber mit Online-Entscheidungsunterstützung bereitzustellen. Aus den hochaufgelösten zeitsynchronisierten PMU-Daten können die Ereignisse schnell abgerufen und verglichen werden, so dass Bediener Vorschläge für Abhilfemaßnahmen erhalten können, welche in Reaktion auf die vorherigen Ereignisse generiert werden. Die Verwendung von PMU-Informationen für eine solche Entscheidungsunterstützung kann Betriebspraktiken ergänzen, die sich auf Überwachungssteuerungs- und Datenerfassungsmessungen (SCADA) stützen, indem sie eine sehr schnelle Reaktion auf das aktuell auftretende Ereignis ermöglichen. Die genaue Identifizierung ähnlicher, historischer Ereignisse kann Netzbetreiber über die Ursache von Störungen informieren und Vorschläge für Reaktionen liefern. Implementierungen der vorgeschlagenen Technologie können die Belastbarkeit und Zuverlässigkeit der Übertragungsleistungssysteme verbessern.

Somit besteht ein Bedarf an einer Lösung, welche die Nachteile des Standes der Technik überwindet und ein verbessertes Verfahren zur Bereitstellung bzw. Ermittlung von Parametern einer oder mehrerer Energiewandlungsanlagen zur Steuerung derer in beispielsweise Energiemanagementsystemen angibt.

Die Aufgabe der Erfindung besteht nunmehr darin, ein Verfahren zur Ermittlung von Parametern einer oder mehrerer Energiewandlungsanlagen anzugeben, welches eine automatisierte Erzeugung der benötigten Parameter aus Messdaten von Sensoren ermöglicht.

Insbesondere sollen hierbei Parameter wie statische Parameter, transiente Parameter und Einflussfaktoren sowie Abhängigkeiten automatisiert ermittelt werden.

Die Aufgabe wird durch ein Verfahren mit den Merkmalen gemäß Patentanspruch 1 der selbstständigen Patentansprüche gelöst. Weiterbildungen sind in den abhängigen Patentansprüchen angegeben.

Gemäß der Erfindung ist es vorgesehen, dass alle notwendigen Parameter für eine Energiewandlungsanlage, welche für das Energiemanagementsystem relevant sind und durch das Energiemanagementsystem gesteuert werden sollen, in einem sogenannten Anlagenmodell abgebildet werden. Hierfür ist es vorgesehen, dass die Parameter aus den erfassten Messdaten der Sensoren bzw. Zähler automatisiert und kontinuierlich extrahiert werden. Eine hierfür notwendige Erfassung von Messdaten kann auch mittels einer Verbindungseinheit wie einem Gateway erfolgen.

Vorgesehen ist es, mittels mehrerer Sensoren Messdaten zu erfassen. Diese erfassten Messdaten der Sensoren werden zu den entsprechenden Messstellen über ein Anlagenschema zugeordnet. Nachfolgend wird eine erste Signalvorverarbeitung durchgeführt, bei welcher sogenannte Anomalien detektiert werden. Somit ist es möglich, nur plausible Messdaten in einem Speicher abzuspeichern, was die Robustheit und Genauigkeit der nachfolgenden Verfahrensschritte erhöht. Der Speicher ist dabei begrenzt und so ausgelegt, dass die neuesten Messdaten die ältesten Messdaten ersetzen. Dadurch werden in den nachfolgenden Bearbeitungsschritten stets die aktuellsten Messdaten berücksichtigt. Alle Messdaten werden in einer ersten Signalvorverarbeitung zeitlich synchronisiert.

Die derart erzeugten, geprüften, synchronisierten und gespeicherten Messdaten werden einer zweiten Signalvorverarbeitung unterzogen, bei welcher eine Detektion von Zustandsänderungen durch verschiedene Algorithmen erfolgt. Diese Zustandsänderungen werden kodiert und somit die wertkontinuierlichen und zeitkontinuierlichen Messdatenverläufe in wertdiskrete, zeitkontinuierliche Zustandsänderungsverläufe überführt. Die Zustandsänderungsverläufe sind dadurch normalisiert und können für verschiedene Messstellen verglichen werden. Das Ergebnis der Kodierung wird gespeichert und für einen nachfolgenden Vergleich der Zustandsänderungsverläufe genutzt. Mittels der Korrelationsbestimmung werden erste Abhängigkeiten bestimmt und können durch Abgleich mit dem Anlagenschema validiert oder in Bezug auf Anomalien untersucht werden. Fehlerhafte Zustandsänderungen werden gelöscht. Dadurch werden nur fehlerfreie Zustandsänderungsverläufe für die weiteren Bearbeitungsschritte genutzt. In einem nachfolgenden Bearbeitungsschritt werden die Zustandsänderungsverläufe mit den zuvor gespeicherten fehlerfreien Messwerten in Kombination betrachtet und stationäre Parameter, transiente Parameter und Abhängigkeiten untereinander bestimmt. Zur Bestimmung von stationären Parametern werden die Messdatenverläufe gemäß ihrer Zustände aus den Zustandsänderungsverläufen zerlegt und durch geeignete Verfahren gruppiert und gegebenenfalls statistisch ausgewertet, wodurch die stationären Parameter für die einzelnen Zustände ermittelt werden. Diese bilden die Grundlage für die Bestimmung der transienten Parameter. Aus den Messdatenverläufen wird der transiente Anteil während der Zustandsänderungen extrahiert und regelbasiert ausgewertet. Zusätzlich werden Abhängigkeiten zwischen Parametern analysiert, in dem Messwert- und Zustandsänderungsverläufe verschiedener Messstellen miteinander in Kombination betrachtet und durch mathematische Verfahren verglichen werden.

Die zuvor erläuterten Merkmale und Vorteile dieser Erfindung sind nach sorgfältigem Studium der nachfolgenden ausführlichen Beschreibung der hier bevorzugten, nicht einschränkenden Beispielausgestaltungen der Erfindung mit den zugehörigen Zeichnungen besser zu verstehen und zu bewerten, welche zeigen:
- Fig. 1:: ein beispielhaftes Energiemanagementsystem mit verschiedenen Komponenten,
- Fig. 2:: eine Darstellung des Ablaufs sowie der Bestandteile des erfindungsgemäßen Verfahrens zur Erzeugung von Parametern einer Energiewandlungsanlage,
- Fig. 3:: ein Beispiel einer Kodierung eines Signalverlaufs von Messdaten eines Sensors,
- Fig. 4:: einen Teilablauf des Verfahrens zur Erzeugung von Parametern einer Energiewandlungsanlage und
- Fig. 5:: auszugsweise ausgewählte Schritte des Verfahrens zur Erzeugung von Parametern einer Energiewandlungsanlage.

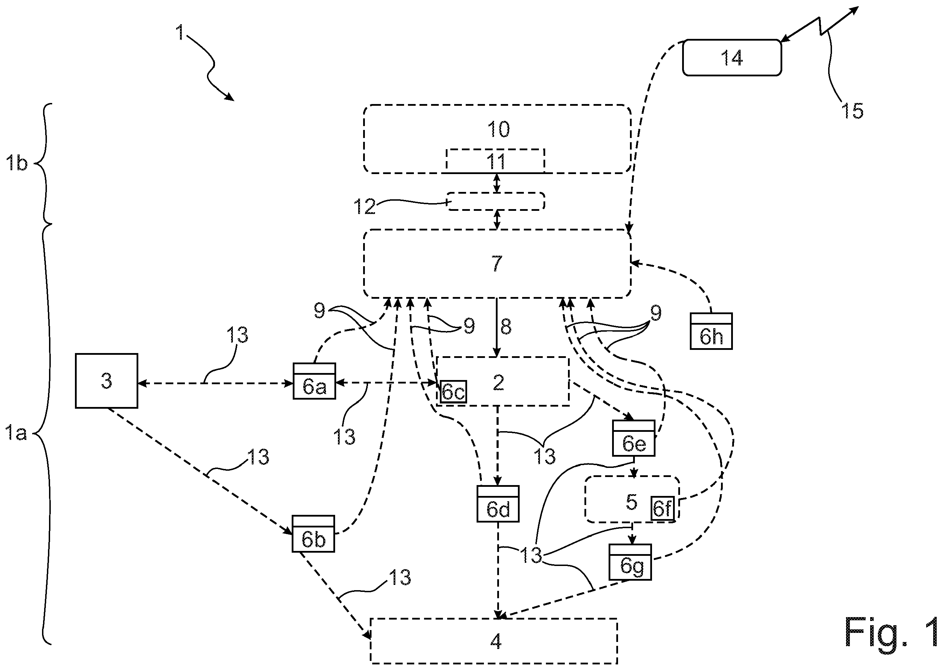

In der Figur 1 ist ein beispielhaftes Energiemanagementsystem 1 mit verschiedenen Komponenten dargestellt

Das Energiemanagementsystem 1 umfasst eine oder mehrere Energiewandlungsanlagen 2. Derartige Energiewandlungsanlagen 2 können beispielsweise eine Kraft-Wärme-Kopplungsanlage, eine Wärmepumpe, eine Brennstoffzelle, ein Heizstab, ein Elektrofahrzeug oder ein Photovoltaik-Anlage sein. Hierbei ist es vorgesehen, dass die Energiewandlungsanlagen 2, welche Energie erzeugen oder verbrauchen können, an ein Versorgungsnetz 3 oder an mehrere Versorgungsnetze 3 angeschlossen sein können.

Weiterhin gibt es Energiebedarfe 4 bzw. kurz Bedarfe 4, welche in den Sektoren Stromversorgung, Wärmeversorgung, Kälteversorgung oder Mobilität auftreten können.

Vorgesehen sind auch sogenannte Speichereinheiten 5 bzw. Energiespeicher 5, welche beispielsweise als thermische, chemische oder elektrische Speichereinheiten 5 ausgelegt sein können.

Das Energiemanagementsystem 1 umfasst weiterhin Sensoren 6 bzw. Zähler, welche an verschiedenen relevanten energetischen Schnittstellen Energieströme bzw. das Betriebsverhalten von Energiewandlungsanlagen 2 und/oder Energiespeichern 5 erfassen.

Weiterhin ist eine lokale Steuerungs- und Regelungseinheit 7 vorgesehen, welche einzelnen oder einer Gruppe an Energiewandlungsanlagen 2 zugeordnet ist und deren Steuerung bzw. Regelung übernimmt. Eine derartige Steuerung bzw. Regelung erfolgt beispielsweise mittels entsprechender durch die Steuerungs- und Regelungseinheit 7 erzeugter Steuerbefehle 8, welche im Beispiel der Figur 1 an eine Energiewandlungsanlagen 2 übertragen werden. Außerdem werden von der Steuerungs- und Regelungseinheit 7 Messdaten 9 von den Sensoren 6 bzw. Zählern 6 empfangen und verarbeitet. Im Beispiel der Figur 1 sind die Sensoren 6a bis 6h dargestellt.

Diese beschriebenen Bestandteile werden von einem sogenannten lokalen Energiemanagementsystem 1a umfasst.

Im Falle eines übergeordneten Energiemanagementsystem 1b wird das Energiemanagementsystem 1 durch einen Bestandteil der Energieleitstelle 10 ergänzt, wie es im oberen Teil der Figur 1 dargestellt ist.

Für eine derartige Ergänzung bzw. Erweiterung eines lokalen Energiemanagementsystems 1a mit einem übergeordneten Energiemanagementsystem 1b ist das übergeordnete Energiemanagementsystem 1b mit einer Schnittstelle 11 ausgestattet. Über diese Schnittstelle 11 kann das übergeordnete Energiemanagementsystem 1b direkt oder über ein Gateway 12, welches auch als eine Verbindungseinheit bezeichnet werden kann, mit dem lokalen Energiemanagementsystem 1a zu einem beide Bestandteile beinhaltenden Energiemanagementsystem 1 gekoppelt werden. Als ein derartiges Gateway 12 bzw. eine Verbindungseinheit wird üblicherweise eine Komponente angesehen, welche eine Verbindung wie eine Datenverbindung zwischen zwei Systemen herstellt. Im Beispiel der Figur 1 stellt das Gateway 12 eine Datenverbindung zwischen der Energieleitstelle 10 und der Steuerungs- und Regelungseinheit 7 her.

Die Energieflüsse 13 im Energiemanagementsystem 1 sind mittels jeweiliger Strich-Strich-Linien dargestellt.

Vorgesehen sein kann es, dass beispielsweise der Steuerungs- und Regelungseinheit 7 Daten einer externen Prognose 14 übertragen werden. Derartige Daten einer Prognose 14 umfassen Informationen über beispielsweise die Temperatur oder Globalstrahlung am Standort des lokalen Energiemanagementsystems über einen Prognosezeitraum von beispielsweise einem Tag in einer zeitlich aufgelösten Form von beispielsweise 15 min.

Bei einem lokalen Energiemanagementsystem 1a ist einer oder mehreren Energiewandlungsanlagen 2 je eine Steuerungs- und Regelungseinheit 7 zugeordnet, auf welcher die benötigten Teilfunktionalitäten des Energiemanagementsystems 1a implementiert sind. Diese Steuerungs- und Regelungseinheit 7 weist mindestens eine Recheneinheit sowie Einheiten zur Speicherung von Daten auf. Derartige Daten können beispielsweise auch in einem Datenbanksystem gespeichert werden.

Das lokale Energiemanagementsystem 1a optimiert den Betrieb aller angeschlossenen Energiewandlungsanlagen 2 nach verschiedenen Gesichtspunkten, wie beispielsweise nach einer Wirtschaftlichkeit, einer Energieeffizienz oder anderen unter Beachtung des auftretenden Energiebedarfs 4. Ein derartiger Energiebedarfs 4 ist entweder bekannt oder kann in einem derartigen System in geeigneter Weise prognostiziert werden.

Derartige Prognosen 14 können beispielsweise auf Basis der im Energiemanagementsystem 1 gewonnenen Messdaten 9 erfolgen, welche mittels verschiedener Sensoren 6 oder Zähler 6 erfasst werden. Weiterhin können für derartige Prognosen 14 externe Daten wie beispielsweise Wetterdaten, welche beispielsweise über das Internet 15 via Funknetz oder DSL-Anbindung oder eine Energieleitstelle 10 empfangen werden können.

Für die Anbindung der Sensoren 6 oder Zähler 6 besitzt das Energiemanagementsystem 1 eine zugeordnete Steuerungs- und Regelungseinheit 7 mit entsprechenden Schnittstellen zur Anbindung der übertragenen Messdaten 9. Die Steuerungs- und Regelungseinheit 7 ist weiterhin mit entsprechenden Schnittstellen zur Verbindung mit einer oder mehreren Energiewandlungsanlagen 2 ausgestattet. Im Falle eines übergeordneten Energiemanagementsystems 1b besitzt die Steuerungs- und Regelungseinheit 7 zusätzlich eine Schnittstelle zu der übergeordneten Energieleitstelle 10. Für den Datenaustausch zwischen der Steuerungs- und Regelungseinheit 7 und dem übergeordneten Energiemanagementsystem 1b kann eine Verbindungseinheit 12 wie ein Gateway vorgesehen werden. Alternativ kann die Funktionalität der Verbindungseinheit 12 auch in die Steuerungs- und Regelungseinheit 7 integriert werden.

Im Falle eines übergeordneten Energiemanagementsystems 1b koordiniert das übergeordnete Energiemanagementsystem 1b mehrere untergelagerte lokale Energiemanagementsysteme 1a, welche wiederum aus einer oder mehreren Energiewandlungsanlagen 2 und einer zugeordneten Steuerungs- und Regelungseinheit 7 bestehen können.

Die Koordination eines derartigen Energiemanagementsystems 1, umfassend ein lokales und ein übergeordnetes Energiemanagementsystem 1a, 1b erfolgt anhand verschiedener Zielgrößen, wie beispielsweise Wirtschaftlichkeit, Energieeffizienz, Spitzenlastkappung und anderen mehr. Die Funktion des Energiemanagementsystems 1 basiert auf den erfassten Messdaten 9, welche durch die Verbindungseinheit 12 (Gateway) oder die Steuerungs- und Regelungseinheit 7 mit Verbindungseinheit-Funktionalität an das übergeordnete Energiemanagementsystem 1b weitergeleitet werden.

Informationen zur Koordination der einzelnen Energiewandlungsanlagen 2 werden von der Energieleitstelle 10 des übergeordneten Energiemanagementsystems 1b an die Steuerungs- und Regelungseinheit 7 übermittelt, welche diese an die untergeordneten Energiewandlungsanlagen 2 übergeben. Diese Informationen zur Koordination können im einfachsten Fall direkte Steuerbefehle wie Einschalten (AN) oder Ausschalten (AUS) oder eine Sollleistungsvorgabe (Psoll) für die entsprechende Energiewandlungsanlage 2 sein.

Für die Funktionsweise eines derartigen Energiemanagementsystems 1 ist mindestens ein das Energiemanagementsystem 1 abbildendes Modell hinterlegt. Mehrere Modelle mit verschiedenen Szenarien können ebenfalls hinterlegt werden.

Anhand eines derartigen Modells kann das Energiemanagementsystem 1 eine Einsatzplanung für die Energiewandlungsanlagen 2 vornehmen. Alternativ kann eine Betriebsüberwachung des Energiemanagementsystems 1 mittels der Steuerungs- und Regelungseinheiten 7 im Echtzeitbetrieb vorgenommen werden.

Derartige Modelle müssen daher sämtliche relevanten Eigenschaften der Energiewandlungsanlagen 2 enthalten.

Hierzu gehören Daten, wie zum Beispiel die Erzeugungsleistungen oder Verbrauchsleistungen jeder Energiewandlungsanlage 2 an allen energetischen Schnittstellen der jeweiligen Anlage oder beispielsweise Anlauf- und Abschaltzeitkonstanten einer Energiewandlungsanlage 2 oder Leistungsrauschen.

Zusätzlich können innerhalb des Energiemanagementsystems 1 relevante Parameter zum energetischen Verschiebepotential, zu den Prognosen 14 sowie zum aktuellen Systemzustand vorrätig sein. Das energetische Verschiebepotential sagt aus, wie lange eine Energiewandlungsanlage 2 ausgeschaltet werden kann, ohne Restriktionen wie beispielsweise einen Wärmebedarf zu verletzen bzw. wie lange eine Energiewandlungsanlage 2 angeschaltet bleiben kann, bis der Speicher bzw. Energiespeicher 5 maximal gefüllt ist.

Die Teilfunktionalitäten des Energiemanagementsystems 1, welche meist anwendungsfallspezifisch entwickelt werden, kombinieren in der Regel ein statisches Modell mit unveränderlichen Informationen bzw. Parametern über mindestens eine zu steuernde Energiewandlungsanlage 2 mit den zusätzlich notwendigen Informationen, wie beispielsweise Prognosen 14 oder aktueller technischer und/oder energetischer Systemzustand der Energiewandlungsanlage 2. Somit kann eine Einsatzplanung, also eine Prognose 14 des zukünftigen, gewollten Betriebs der steuerbaren Energiewandlungsanlagen 2 vorgenommen werden.

Die Teilfunktionalitäten, die ein Energiemanagementsystem aufweisen muss, lassen sich gliedern in die Einsatzplanung, Steuerung/Regelung und Betriebsüberwachung. Für die Umsetzung einer Anwendung, zum Beispiel die Reduktion der Spitzenlast in einem elektrischen Versorgungsnetz 3, müssen die sich aus der Anwendung ergebenden logischen Verknüpfungen berücksichtigt werden und werden daher im Modell abgebildet. Eine logische Verknüpfung stellt dabei dar, wie zum Beispiel eine spezifische Energiewandlungsanlage 2, zum Beispiel ein Elektrofahrzeug, zur Reduktion der Spitzenlast in einem elektrischen Versorgungsnetz 3 beitragen kann, dabei die Verfügbarkeit des Elektrofahrzeugs berücksichtigt wird und gleichzeitig gewährleistet wird, dass für den Bedarf 4 an Mobilität immer ausreichend Energie im Speicher des Elektrofahrzeugs zur Verfügung steht.

Für die Prognosen 14 werden in der Regel Prognosen 14 zu Energiebedarf 4 sowie zur Einspeisung von nicht steuerbaren Energiewandlungsanlagen 2 als Parameter für das Energiemanagementsystem 1 genutzt. Eine derartige nicht steuerbare Energiewandlungsanlage 2 ist beispielsweise eine Photovoltaik-Anlagen.

Zusätzlich verwendet das Energiemanagementsystem 1 die Modelle, um den geplanten Betrieb für die Energiewandlungsanlagen 2 im Echtzeitbetrieb umzusetzen. Hierbei muss gesteuert bzw. geregelt und überwacht werden. Ausfälle und/oder Abweichungen müssen zeitnah erkannt und ausgeglichen werden.

Energiemanagementsysteme nach dem bekannten Stand der Technik basieren darauf, dass die Modelle der Energiewandlungsanlagen 2 als einzelne Modelle mit ihren statischen Parametern manuell konfiguriert werden. Jede Energiewandlungsanlage 2 wird dabei stets über ein eigenes hersteller- bzw. technologiespezifisches Modell beschrieben.

Somit muss das Energiemanagementsystem 1 mit seinen Teilfunktionalitäten Einsatzplanung, Steuerung/Regelung und Betriebsüberwachung spezifisch an den jeweiligen Anwendungsfall angepasst werden, das heißt die verschiedenen hersteller- bzw. technologiespezifischen Modelle müssen in das Verfahren integriert werden. Gleichzeitig müssen verschiedene Ziele für den Betrieb oder Grenzen, die den Betrieb der Energiewandlungsanlagen 2 einschränken, gesondert im Energiemanagementsystem 1 und in den Verfahren für die Einsatzplanung, Steuerung/ Regelung und Betriebsüberwachung berücksichtigt werden.

Beispiele für Betriebsgrenzen von derartigen Anlagen sind z.B.:
- der Wärmebedarf, wenn zwei Energiewandlungsanlagen 2 an der Wärmebereitstellung beteiligt sind
- die Verfügbarkeit eines Elektrofahrzeugs (E-Fahrzeug ist an Steckdose angeschlossen)
- der Speicherladezustand eines thermischen oder elektrischen Speichers 5
- maximale mögliche oder minimal notwendige Einspeisung in elektrische Versorgungsnetze 3

Insbesondere bei einer Abbildung mehrerer Energiewandlungsanlagen 2, welche in einem logischen Zusammenhang stehen, wird die Umsetzung eines Energiemanagementsystems nach dem Stand der Technik schwierig.

In einem logischen Zusammenhang bzw. einer logischen Verknüpfung stehen beispielsweise zwei oder mehr Energiewandlungsanlagen 2, welche einen gemeinsam Energiebedarf 4 decken oder an einer Steuerungs- und Regelungseinheit 7 angeschlossen sind und in einem funktionalen Zusammenhang stehen. Ein derartiger funktionaler Zusammenhang besteht beispielsweise in einem System, bestehend aus zwei Kraft-Wärme-Kopplungsanlagen 2, welche gemeinsam den thermischen Bedarf 4 in einem Gebäude decken.

Durch die feste, logische Integration von hersteller- bzw. technologiespezifischen Modellen und Grenzen in die Verfahren für die Einsatzplanung, Steuerung/Regelung und Betriebsüberwachung wird die Entwicklung eines Energiemanagementsystems erschwert. Vorteilhaft ist daher eine, dem Energiemanagementsystem vorgelagerte Abstraktionsebene, durch die verschiedene Energiewandlungsanlagen 2 und verschiedene Grenzen abgedeckt werden können und die die Anwendung im Energiemanagementsystem standardisieren und vereinheitlichen.

Weiterhin benötigt werden Parameter der Energiewandlungsanlagen 2, welche durch den Hersteller vorgegeben werden oder welche bei einer Inbetriebnahme der Energiewandlungsanlagen 2 des Energiemanagementsystem 1 messtechnisch erfasst werden können. Zu derartigen Parametern gehört beispielsweise eine elektrische Leistung im Zustand "AUS" und "EIN", eine Zeitdauer für einen Wechsel vom Zustand "AUS" zum Zustand "EIN" und Schwankungen der elektrischen Leistung im Zustand "EIN" beispielsweise um einen stationären Wert, welche auch als Leistungsrauschen bezeichnet werden.

Nach dem bekannten Stand der Technik werden diese Parameter durch den Hersteller vorgegeben oder sie werden im Rahmen einer Inbetriebnahme messtechnisch erfasst. Nachteilig an den durch einen Hersteller vorgegebenen Parametern ist es, dass sich diese im laufenden Betrieb einer Energiewandlungsanlagen 2 verändern können. Ursachen hierfür können Alterung und Verschleiß sein. Besonders nachteilig an den mittels einer Inbetriebnahme erfassten Parametern ist der personelle, zeitliche und finanzielle Aufwand, wobei sich auch derart erfasste Parameter im laufenden Betrieb einer Energiewandlungsanlagen 2 verändern können.

Das hier vorgestellte Verfahren ermöglicht es, dass alle notwendigen Parameter für eine Energiewandlungsanlage 2, welche für das Energiemanagementsystem 1 relevant sind und zur Steuerung des Energiemanagementsystems 1 in einem sogenannten Anlagenmodell 46 abgebildet werden, aus den erfassten Messdaten 9 der Sensoren 6 bzw. Zähler automatisiert extrahiert werden.

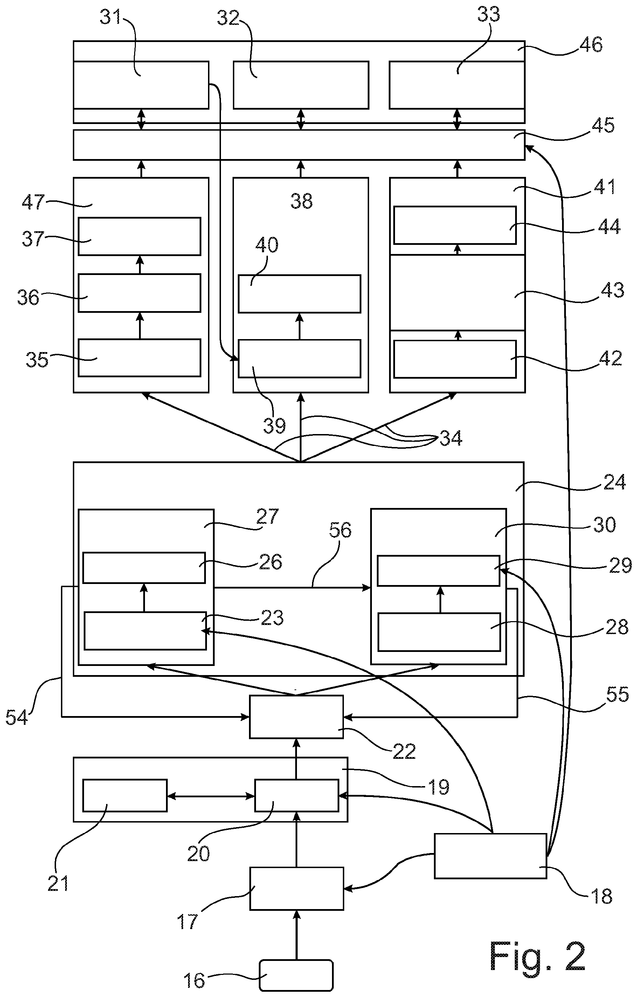

Die Figur 2 zeigt eine Darstellung des Ablaufs sowie der Bestandteile des erfindungsgemäßen Verfahrens zur Erzeugung von Parametern einer Energiewandlungsanlage.

Die Messdaten 9 werden im Schritt 16 durch Sensoren 6 erfasst und an eine Verbindungseinheit 12 wie beispielsweise ein Gateway übermittelt. Diese erzeugten Messdaten 9 der Sensoren 6 bzw. Zähler sind zunächst keiner Messstelle logisch zugeordnet, so dass im nächste Schritt 17 eine Zuordnung zur einer bekannten Messstelle (Messdatenzuordnung) erfolgt. Hierbei beschreibt die Messstelle den physischen Ort, an welchem der Sensor 6 im Energiemanagementsystem 1 angeordnet ist. Bezugnehmend auf die Figur 1 ist die Messstelle des Sensors 6a in einer Verbindungsleitung zwischen der Energiewandlungsanlage 2 und dem Versorgungsnetz 3 angeordnet. Die Messstelle des Sensors 6c liegt beispielsweise in der Energiewandlungsanlage 2.

Die Zuordnung der Messstellen erfolgt in Kombination mit einem sogenannten Anlagenschema 18, welches eine oder mehrere Energiewandlungsanlagen 2 mit ihren Speichern 5 und Bedarfen 4 abbildet und somit eine logische Verknüpfung zu den einzelnen Messstellen der Sensoren 6 herstellt.

So erlaubt zum Beispiel die Definition eines Anlagenschemas 18 als "Kraft-Wärme-Kopplung, Brennwerttherme mit thermischem Speicher und Raumwärme- und Trinkwarmwasserbedarf" eine Ableitung von Energieflüssen und notwendigen Korrelation. Eine solche Korrelation kann zum Beispiel die Abhängigkeit des Raumwärmebedarfs von der Außentemperatur sein oder die Effizienz der Brennwerttherme von der Rücklauftemperatur vom Speicher zur Brennwerttherme.

Nachfolgend erfolgt im Schritt 19 eine erste Signalvorverarbeitung, bei welcher ungültige Messdaten 9 bzw. Messwerte eliminiert werden, um eine Anwendbarkeit der Messdaten 9 für die nachfolgenden Verfahrensschritte sicherzustellen. Hierzu wird eine Anomaliedetektion 20 mittels einer statistischen Bewertung 21 der erfassten Messwerte 9 durchgeführt. Hierbei wird beispielsweise der Signalverlauf überwacht. Außerdem kann beispielsweise für eine oder mehrere Messstellen ein Konfidenzintervall bzw. ein Erwartungsbereich angegeben werden. Der Erwartungsbereich kann beispielsweise durch den minimalen und den maximalen Messbereich des Sensors 6 gebildet werden. Für die statische Bewertung 21 werden die unbearbeiteten Messdaten 9 in einem geeigneten Speicher zwischengespeichert.

Die bei dieser ersten Signalvorverarbeitung 19 ermittelten gültige Messdaten 9 bzw. Messwerte werden im Anschluss in einem Messdatenspeicher beziehungsweise Speicher 22 wie beispielsweise in einem Ringspeicher gespeichert. Dieser Ringspeicher 22 speichert die Messdaten 9 zeitlich synchronisiert. Diese Zeitsynchronisation kann beispielsweise durch lineare Interpolation und Abtastung erreicht werden (Resampling), wobei die Messdaten 9 über mehrere Tage gespeichert werden können. Alternativ ist eine dynamische Anpassung der Speicherdauer vorgesehen.

Nachfolgend wird im Rahmen einer zweiten Signalvorverarbeitung 24 eine Detektion 27 von Zustandsänderungen 25 durchgeführt.

Bei dieser werden die Messdaten 9, welcher einer Messstelle zugeordnet wurden, bezüglich ihrer Zustandsänderungen 25 in ihrem zeitlichen Verlauf im Rahmen einer Signalanalyse 23 untersucht. Beispielhaft einsetzbare Verfahren sind zum Beispiel Differenzenverfahren, Wavelet-Analyse, Kreuzkorrelationsverfahren. Das genutzte Verfahren und die genutzten Schwellwerte sind dabei abhängig vom Typ der Messdaten 9, wie beispielsweise eine Temperatur, eine Leistung oder ein Volumenstrom, welcher anhand des Anlagenschemas 18 bekannt ist. Hierbei können insbesondere die Schwellwerte adaptiv gestaltet sein.

Erkannte Zustandsänderungen 25 werden im Anschluss einer Kodierung 26 unterzogen. Hierbei werden die Zustandsänderungen 25 in Kombination miteinander betrachtet und ein idealisierter bzw. normalisierter Verlauf der Zustandsänderungen 25 erstellt.

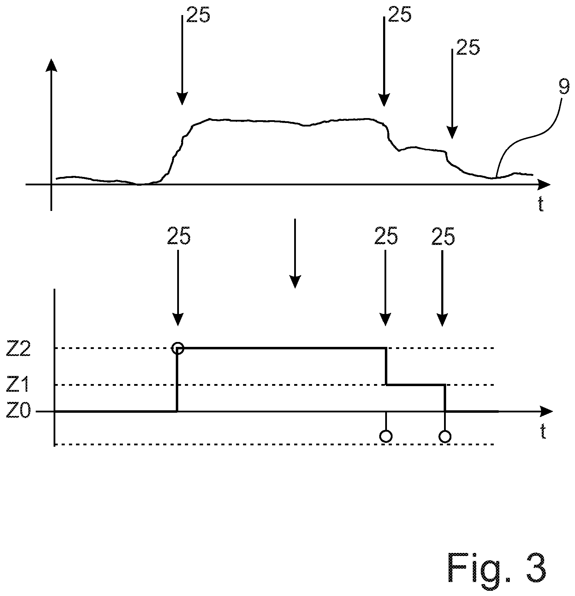

Ein Beispiel einer Kodierung 26 ist in der Figur3 dargestellt. Im Beispiel wird der im oberen Teil der Figur 3 dargestellte Signalverlauf der Messdaten 9 eines Sensors 6 analysiert und auf drei Zustände Z0, Z1 und Z2, welche an der Ordinate im unteren Teil der Figur 3 abgebildet sind, kodiert. Hierbei werden die Zustandsänderungen 25 der Messdaten 9 detektiert. Das Ergebnis der Kodierung 26 ist ein wertdiskretes und zeitkontinuierliches kodiertes Signal, auch als kodierte Zustandsänderungen 56 bezeichnet, wie es im unteren Bereich der Figur 3 dargestellt ist. Im Beispiel wurde bei der ersten Zustandsänderung 25, welche zeitlich gesehen zuerst auftritt, eine Veränderung des Signalverlaufs der Messdaten 9 mit einem Wert von +2 (siehe Kreis am Graphen), bei der zeitlich gesehen zweiten Zustandsänderung 25 eine Veränderung des Signalverlaufs der Messdaten 9 mit einem Wert von -1 und bei der zeitlich gesehen dritten Zustandsänderung 25 ebenfalls ein Veränderung des Signalverlaufs der Messdaten 9 mit einem Wert von -1 erkannt und in den drei Zustände Z0, Z1 und Z2 entsprechend abgebildet beziehungsweise kodiert.

Das Ergebnis der Kodierung 26 wird in einem Vorgang 54 der Speicherung der kodierten Zustandsänderungen 56 gespeichert und im Anschluss in einer Analyse von Zustandsänderungen 30 mittels einer Korrelation bzw. Korrelationsbestimmung 28 untersucht.

Hierbei werden zunächst die Korrelationen aller möglichen Kombinationen der Ergebnisse der Kodierungen 26 im Rahmen der Korrelationsbestimmung 28 untersucht. Als geeignetes Verfahren ist die Anwendung der Kreuzkorrelation, der Differenzen der Integrale oder eine Kombination möglich. Im Anschluss wird die Korrelation einer Bewertung 29 zugeführt. In Abhängigkeit des Verfahrens wird anhand von Schwellwerten und anhand des Anlagenschemas 18 die Bewertung 29 vorgenommen. Erkannte Korrelationen in den Zustandsänderungen 25 führen somit zu der Erkenntnis, dass Messdaten 9 miteinander korrelieren, also in einem Zusammenhang miteinander stehen. Die Ergebnisse der Bewertung 29 werden im Vorgang Speicherung der erkannten Korrelationen 55 im Speicher 22 gespeichert. Durch Abgleich mit sogenannten logischen Verknüpfungen, wie sie sich aus dem Anlagenschema 18 ergeben, lassen sich somit die identifizierten Zustandsänderungen 25 auf Anomalien untersuchen. Sollten Anomalien detektiert werden, so werden die mit Anomalien versehenen, identifizierten Zustandsänderungen 25 aus dem Speicher 22 gelöscht.

Mit fehlerfreien Messwerten 9 und deren Zustandsänderungsverläufen 34 sowie zugehörigen Messdaten 9 werden im Anschluss die stationären Parameter 31, die transienten Parameter 32 und die Abhängigkeiten 33 bestimmt.

Für die Bestimmung 47 von stationären Parametern 31 erfolgt eine Extraktion 35 von stationären Messwertverläufen, wobei hierfür die identifizierten Zustandsänderungen 25 genutzt werden. Im Anschluss werden die einzelnen Messdaten 9 in Abhängigkeit der zugeordneten Zustände gruppiert. Eine allgemeine Gruppierung ist bereits durch die Kodierung von Zustandsänderungen 25 erfolgt. Das Verfahren sieht vor, als weiteren Schritt eine erste Gruppierung 36 durch ein sogenanntes Clustering vorzunehmen, um die Zuverlässigkeit des Verfahrens zu erhöhen. Hierbei werden insbesondere Messdaten 9 an den Grenzen zu den Zustandsänderungen eliminiert. Als Clustering-Verfahren kommen zum Beispiel "k-means", "k-medoid" oder dichtebasierte Verfahren in Betracht.

Die finalen Gruppen werden im Anschluss einer statistischen Auswertung 37 zugeführt. Derart können beispielsweise Leistungsstufen oder eine Fluktuation von Messdaten 9 ausgewertet werden.

Neben den stationären Parametern 31 werden auch transiente Parameter 32 bestimmt. Hierfür wird zunächst innerhalb einer Bestimmung 38 transienter Parameter Zeitabschnitte im Bereich der identifizierten Zustandsänderungen 25 eine Extraktion 39 von transienten Messwertverläufen vorgenommen.

Hierzu werden die bestimmten stationären Parameter 31 mit Zuordnung zu entsprechenden Zuständen genutzt. Anhand von Schwellwerten, die sich zum Beispiel aus der Leistungsfluktuation ergeben, kann der Beginn und das Ende des transienten Vorgangs abgeleitet werden. In Abhängigkeit des Anlagenschemas 18 und des zu bestimmenden transienten Parameters 32 erfolgt im Anschluss die regelbasierte Auswertung 40 des entsprechenden transienten Parameters 32.

Neben den stationären Parametern 31 und transienten Parametern 32, welche keine Abhängigkeiten zwischen Parametern beschreiben, werden zusätzlich Abhängigkeiten 33 identifiziert. Hierzu wird innerhalb einer Bestimmung 41 von Abhängigkeiten zunächst wieder eine Extraktion 42 von stationären Anteilen an den Verläufen extrahiert. Ebenso werden die Zustandsänderungen 25 extrahiert. Zu diesem Zweck werden die stationären Anteile durch die Zustandsänderungen 25 in den Messdaten 9 genutzt. Derartige stationäre Anteile sind in der unteren Darstellung der Figur 3 gezeigt.

Anhand der zeitlichen Grenzen der Abschnitte können die stationären Anteile aus einem weiteren Messwertverlauf extrahiert werden. Bezüglich der Zustandsänderungen wird aus den kodierten Signalen die jeweilige Änderung bestimmt. Um eine zweite Gruppierung 43 der Zustandsänderungen in Abhängigkeit der Messdaten 9 vornehmen zu können, werden die zum Zeitpunkt vorhandenen Messdaten 9 ebenso extrahiert. Im Anschluss werden die Messdaten 9 untereinander, Zustandsänderungen in Bezug auf die Uhrzeit und Zustandsänderungen in Bezug auf Messwerte bezüglich Gruppenbildung untersucht.

Die Uhrzeit wird dabei relativ eingesetzt, zum Beispiel "Stunde des Tages", "Minute seit Einschaltvorgang", .... Für die Gruppenbildung können zum Beispiel die Verfahren "k-means", "k-medoid" oder dichtebasierte Verfahren genutzt werden. Im Anschluss wird eine Auswertung 44 der zweiten Gruppierung 43 durchgeführt.

Beispielhaft kann die Anwendung von Regressionsanalysen und anschließender Gütebewertung mit z.B. dem Bestimmtheitsmaß genutzt werden, um Abhängigkeiten von Messwerten 9 untereinander zu ermitteln. Das Verfahren ist dadurch gekennzeichnet, dass das Verfahren zur Auswertung abhängig vom Parameter / Messgröße / untersuchter Zustandsänderung ist, zu der eine Abhängigkeit bewertet wird.

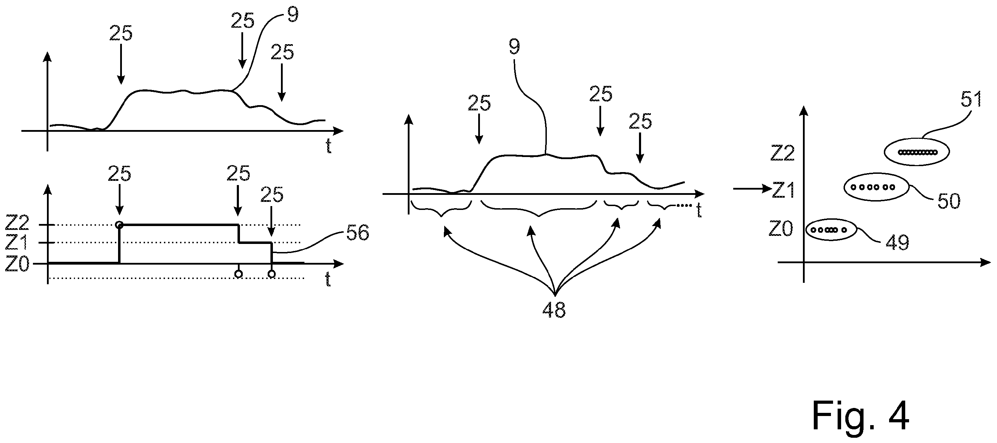

Ein Teilablauf des Verfahrens zur Erzeugung von Parametern einer Energiewandlungsanlage 2 ist in der Figur 4 dargestellt. Die Figur 4 zeigt eine Bestimmung der stationären Parameter 31. Dargestellt ist es, wie anhand des Verlaufs der Messdaten 9 und den daraus kodierten Zuständen Z0, Z1 und Z2 die einzelnen Signalabschnitte 48 aus dem Verlauf der Messdaten 9 extrahiert werden. Im Beispiel der Figur 4 sind im mittleren Diagramm mithilfe der Zustandsänderungen 25 vier derartige Signalabschnitte 48 erkannt bzw. extrahiert worden, was mit vier Pfeilen dargestellt ist.

Diese Signalabschnitte 48 werden für das Clustering genutzt, wobei die einzelnen Werte aus den Signalabschnitten 48 zugeordnet zu den Zuständen Z0, Z1 und Z2 in den Gruppen 1, 2 und 3 zur ersten Gruppierung 36 abgetragen werden.

Im Ergebnis ergeben sich drei Cluster (Gruppe1 49, Gruppe2 50, Gruppe3 51), welche in einer statistischen Bewertung 21 ausgewertet werden. Am Beispiel der Darstellung im rechten Teil der Figur 4 ist die elektrische Leistung einer Energiewandlungsanlage 2 mit drei Zuständen gezeigt. So ist beispielsweise der Zustand Z0 dem Betriebszustand "Anlage AUS", der Zustand Z1 dem Betriebszustand "Anlage EIN" in einer Leistungsstufe 1 und der Zustand Z2 dem Betriebszustand "Anlage EIN" in einer Leistungsstufe 2 zugeordnet. Im Ergebnis der statistischen Bewertung 21 ist die jeweilig mittlere Leistung der Zustände Z0, Z1 und Z2 bekannt.

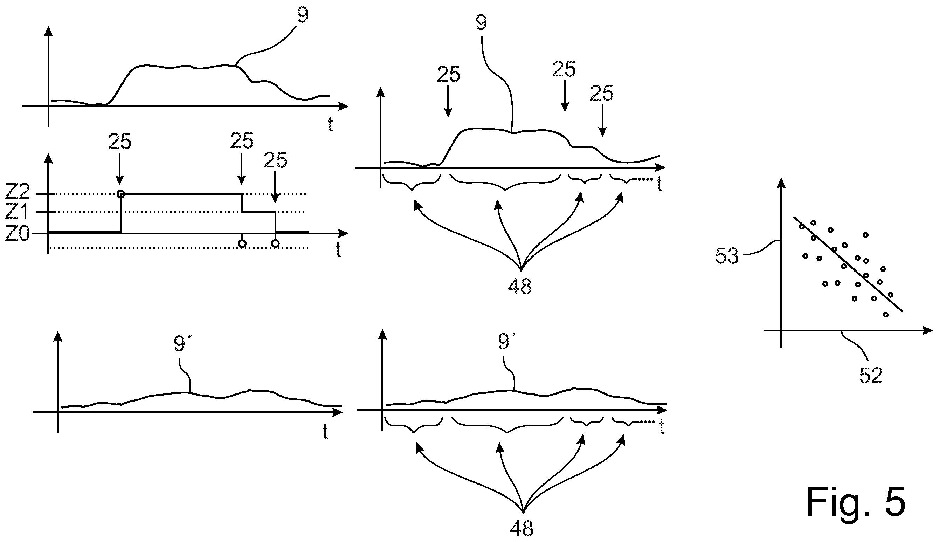

Die Figur 5 stellt auszugsweise ausgewählte Schritte des Verfahrens zur Erzeugung von Parametern einer Energiewandlungsanlage dar. Die Figur 5 zeigt die Bestimmung von Abhängigkeiten, beispielsweise am Beispiel der elektrischen Leistung einer Energiewandlungsanlage 2 mit den Zustandsänderungen 25 sowie den Zuständen Z0, Z1 und Z2.

Im Beispiel der Figur 5 besteht das Ziel darin, zu ermitteln wie sehr die Leistung in Abhängigkeit von der Außentemperatur variiert. Hierfür werden neben den bereits bekannten Messdaten 9 für die Leistung der Energiewandlungsanlage 2, deren Verlauf im oberen linken Bereich der Figur 5 gezeigt ist, weitere Messdaten 9' aufgenommen, welche im unteren linken Bereich der Figur 5 gezeigt sind. Diese weiteren Messdaten 9' sind zeitgleich aufgenommene Daten einer Messung einer Außentemperatur.

Dargestellt ist es auch in der Figur 5, wie anhand des Verlaufs der Messdaten 9 und den daraus kodierten Zuständen Z0, Z1 und Z2 die einzelnen Signalabschnitte 48 aus dem Verlauf der Messdaten 9 extrahiert werden.

Anhand der erkannten Zustandsänderungen 25 werden die Signalabschnitte 48 sowohl für den Verlauf der Messdaten 9 als auch für den Verlauf der weiteren Messdaten 9' festgelegt. Nachfolgend werden die einzelnen Signalabschnitte 48 des ersten Verlaufs der Messdaten 9 mit den zeitsynchronen Signalabschnitten 48 des weiteren Verlaufs der Messdaten 9' zusammenbetrachtet und beispielsweise einer Regressionsanalyse unterzogen.

Am Beispiel der Leistung im Betriebszustand "Anlage EIN" in der Leistungsstufe 2 im Zustand AN mit Leistungsstufe 2 kann nun die Abhängigkeit von der Außentemperatur ermittelt werden. Derart sind Aussage zur Abhängigkeit der erzeugten Leistung einer Energiewandlungsanlage 2 von der Außentemperatur möglich. Im rechten Teil der Figur 5 ist das Ergebnis des Beispiels dargestellt, wobei auf der Abszisse die Werte 52 der ersten Messdaten 9 zur Leistung und auf der Ordinate die Werte 53 der weiteren Messdaten 9'zur Außentemperatur dargestellt sind.

Vorgesehen ist es, dass sämtliche ermittelte Parameter 31, 32 und 33 erst als gültige Parameter 31, 32 und 33 übernommen und im Anlagenmodell 46 gespeichert werden, wenn diese in einer Parameterprüfung 45 überprüft wurden.

Hierbei werden wiederum Konfidenzintervalle genutzt, wie sie beispielsweise im Anlagenschema 18 hinterlegt wurden. Zusätzlich werden die Parameter 31,32 und 33 in Bezug auf bereits bestimmte und gespeicherte Werte der jeweiligen Parameter 31, 32 und 33 im Anlagenmodell 46 überprüft. Hierbei wird eine Wichtung vorgenommen, so dass Änderungen in den Parametern 31, 32 und 33 nur in begrenztem Maße die Parameter 31, 32 und 33 verändern.

Das beschriebene Verfahren zur Erzeugung von Parametern einer Energiewandlungsanlage 2 wird in diesem Umfang zunächst nur in einer Initialisierungsphase umgesetzt. Besitzt die Energiewandlungsanlage 2 eine autonome Betriebsweise (zum Beispiel der wärmegeführte Betrieb bei Kraft-Wärme-Kopplungsanlagen), so wird die Energiewandlungsanlage 2 zunächst über einen definierten Zeitraum in dieser Betriebsweise betrieben (Initialisierungsphase).

Der Zeitraum kann beispielsweise 4 Woche betragen. Innerhalb dieser Zeit werden durch das Verfahren Randbedingungen für den autonomen Betrieb als externe Einflussgrößen ermittelt (d.h. wann schaltet die Anlage ohne Steuerung durch das Energiemanagementsystem 1 ein, wann schaltet die Anlage ohne Steuerung durch das Energiemanagementsystem 1 aus). Im Falle von Kraft-Wärme-Kopplungsanlagen, Brennstoffzellen oder Wärmepumpen sind hierfür Schwellwerte für Temperaturen im thermischen Speicher relevant. Ist ein autonomer Betrieb nicht möglich, so wird ein durch das Energiemanagementsystem 1 gesteuerter Betrieb initiiert.

Nach der Initialisierungsphase befindet sich die Energiewandlungsanlage 2 im gesteuerten Betrieb. Im Anlagenschema 18 sind Parameter markiert, die nur in der Initialisierungsphase bestimmt werden.

Nachdem alle Parameter 31, 32 und 33 bestimmt wurden, wird das beschriebene Verfahren fortlaufend und kontinuierlich als Hintergrundfunktion angewendet. Ziel hierbei ist es, dass Änderungen in den Parametern 31, 32 und 33 detektiert werden. Änderungen führen zu einer Aktualisierung der Parameter 31, 32 und 33. In Abhängigkeit der Parameter 31, 32 und 33 wird die Änderung bzgl. ihrer Quantität bewertet und anschließend, in Abhängigkeit der Quantität, vollautomatisch übernommen oder ein Administrator des Energiemanagementsystems 1 über die Änderung benachrichtigt. Letztes hat zum Ziel, dass die Sicherheit gewährleistet bleibt und Änderungen in Folge von Fehlfunktionen von z.B. der Sensorik keine Fehlfunktion des Energiemanagementsystems 1 bewirkt.

Bei fortlaufender Anwendung des Verfahrens zur Erzeugung von Parametern einer Energiewandlungsanlage ergibt sich die Anwendung des Verfahrens für adaptive Wartungsintervalle der Energiewandlungsanlage 2 in Abhängigkeit des Anlagenbetriebs.

Gleichzeitig erlaubt es das Verfahren, durch kontinuierliche Auswertung der zeitgleichen Zustandsänderungen und deren Güte evtl. auftretende Ausfälle in der Sensoren 6 selbstständig zu erkennen und einen Administrator zu informieren.

Das Verfahren ist anwendbar auf dem Gateway 12, welches die Messdaten 9 erfasst oder bei einem übergeordneten Energiemanagementsystem 1b in der Energieleitstelle 10. Vorzugsweise ist der Einsatz auf dem Gateway 12 vorzusehen, da dies den Kommunikationsaufwand reduziert und die Datensicherheit deutlich erhöht.

Neben dem Einsatz im Energiemanagementsystem 1 ist ein Einsatz in Monitoring und Diagnosesystemen möglich. Durch die vollautomatische Bestimmung der Parameter 31, 32 und 33 wird es möglich, zunächst Alterungserscheinungen durch Trendanalyse und Fehlfunktionen zu identifizieren. Gleichzeitig stellt das Verfahren den Basisbaustein für eine vollautomatisierte Energieberatung dar. Die energetische Versorgungsstruktur (Anlagentechnik) kann identifiziert und bzgl. ihrer Effizienz bewertet werden. Mit nachgelagerten Optimierungsverfahren ist eine Verbesserung der Versorgungsstruktur möglich.

### LISTE DER BEZUGSZEICHEN

- 1: Energiemanagementsystem
- 1a: lokales Energiemanagementsystem
- 1b: übergeordnetes Energiemanagementsystem
- 2: Energiewandlungsanlage
- 3: Versorgungsnetz
- 4: Energiebedarf / Bedarf
- 5: Energiespeicher
- 6, 6a, 6b, ..., 6n: Sensor / Zähler
- 7: Steuerungs- und Regelungseinheit
- 8: Steuerbefehl
- 9, 9': Messdaten/Messwerte
- 10: Energieleitstelle
- 11: Schnittstelle
- 12: Verbindungseinheit / Gateway
- 13: Energiefluss
- 14: Prognose
- 15: Internet
- 16: Messdatenerzeugung
- 17: Messdatenzuordnung
- 18: Anlagenschema
- 19: erste Signalvorverarbeitung
- 20: Anomaliedetektion
- 21: Statistische Bewertung
- 22: Messdatenspeicherung / Ringspeicher
- 23: Signalanalyse
- 24: zweite Signalvorverarbeitung
- 25: Zustandsänderung
- 26: Kodierung
- 27: Detektion von Zustandsänderungen
- 28: Korrelationsbestimmung
- 29: Bewertung
- 30: Analyse von Zustandsänderungen
- 31: stationäre Parameter
- 32: transiente Parameter
- 33: Abhängigkeiten
- 34: Zustandsänderungsverläufe und Messdaten
- 35: Extraktion stationärer Messdatenverläufe
- 36: erste Gruppierung
- 37: statistische Auswertung
- 38: Bestimmung transienter Parameter
- 39: Extraktion transienter Messwertverläufe
- 40: regelbasierte Auswertung
- 41: Bestimmung von Abhängigkeiten
- 42: Extraktion von stationären Anteilen
- 43: zweite Gruppierung
- 44: Auswertung der Gruppierung
- 45: Parameterprüfung
- 46: Anlagenmodell
- 47: Bestimmung statischer Parameter
- 48: Signalabschnitte
- 49: Gruppe 1
- 50: Gruppe 2
- 51: Gruppe 3
- 52: Werte erste Messdaten
- 53: Werte zweite Messdaten
- 54: Speicherung der kodierten Zustandsänderungen
- 55: Speicherung der erkannten Korrelationen
- 56: kodierte Zustandsänderungen

## Patentansprüche

1. Verfahren zur Ermittlung von Parametern einer oder mehrerer Energiewandlungsanlagen (2), welches Parameter von einer oder mehreren Energiewandlungsanlagen (2) aus kontinuierlich erfassten Messdaten (9) bestimmt und in einem Anlagenmodell (46) speichert, **dadurch gekennzeichnet, dass** mittels Sensoren (6) Messdaten (9) erfasst werden, und in einem Schritt einer Messdatenzuordnung (17) zu Messstellen zugeordnet und nach einer ersten Signalvorverarbeitung (19), bei welcher Anomalien detektiert werden, in einem Speicher (22) nur plausible Messdaten (9) gespeichert werden, dass die gespeicherten Messdaten (9) einer zweiten Signalvorverarbeitung (24) unterzogen werden, bei welcher eine Detektion (27) von Zustandsänderungen und eine Analyse (30) von Zustandsänderungen mittels Korrelation erfolgt und bei welcher Zustandsänderungsverläufe (34) mit ihren Messdaten (9) erzeugt werden, dass nachfolgend auf Grundlage der Zustandsänderungsverläufe (34) mit ihren Messdaten (9) eine Bestimmung (47) von stationären Parametern (31), eine Bestimmung (38) von transienten Parametern (32) und eine Bestimmung (41) von Abhängigkeiten (33) erfolgt, wobei stationäre Parameter (31) Bemessungsleistungen für alle energetischen Schnittstellen, Schaltstufen für alle energetischen Schnittstellen, eine Minimale Verweildauer im eingeschalteten Zustand, eine Minimale Verweildauer im ausgeschalteten Zustand sowie eine Leistungsfluktuation für eine zu vermarktende energetische Schnittstelle sind, wobei transiente Parameter (32) Anlaufzeitkonstanten, Abschaltzeitkonstanten oder eine erzeugte Energie in einem Anlauf- und Abschaltprozess für alle energetische Schnittstellen sind und wobei Abhängigkeiten (33) eine Abhängigkeit einer Leistungsfluktuation von externen Einflussgrößen, Zeiten mit einem gesperrtem Betrieb, Zeiten und Grenzwerte für eine Nachtabschaltung bei wärmetechnischen Anlagen oder Grenzwerte für eine Ein- und Ausschaltung im autonomen Betrieb sind.

2. Verfahren nach Anspruch 1, **dadurch gekennzeichnet, dass** die Zuordnung der Messdaten (9) zu Messstellen unter Nutzung eines Anlagenschemas (18) erfolgt.

3. Verfahren nach Anspruch 1 oder 2, **dadurch gekennzeichnet, dass** bei der ersten Signalvorverarbeitung (19) eine Anomaliedetektion (20) und eine statistische Bewertung (21) durchgeführt wird.

4. Verfahren nach einem der Ansprüche 1 bis 3, **dadurch gekennzeichnet, dass** die bestimmten stationären Parameter (31), transienten Parameter (32) und die Abhängigkeiten (33) einer Parameterprüfung (45) zugeführt und nachfolgend gültige Parameter (31, 32, 33) in dem Anlagenmodell (46), welches die Eigenschaften einer Energiewandlungsanlage (2) beschreibt, gespeichert werden.

5. Verfahren nach einem der Ansprüche 1 bis 4, **dadurch gekennzeichnet, dass** bei der Detektion (27) von Zustandsänderungen eine Signalanalyse (23) und eine Kodierung (26) von Zustandsänderungen (25) der Messdaten (9) vorgenommen wird.

6. Verfahren nach einem der Ansprüche 1 bis 5, **dadurch gekennzeichnet, dass** bei der Analyse (30) eine Korrelationsbestimmung (28) und eine Bewertung (29) der Korrelation vorgenommen wird.

7. Verfahren nach einem der Ansprüche 1 bis 6, **dadurch gekennzeichnet, dass** bei der Bestimmung (47) von stationären Parametern (31) eine Extraktion (35) stationärer Messdatenverläufe, eine erste Gruppierung (36) sowie eine statistische Auswertung (37) durchgeführt wird.

8. Verfahren nach einem der Ansprüche 1 bis 7, **dadurch gekennzeichnet, dass** bei der Bestimmung (38) von transienten Parametern (32) eine Extraktion (39) transienter Messwertverläufe und eine regelbasierte Auswertung (40) durchgeführt wird.

9. Verfahren nach einem der Ansprüche 1 bis 8, **dadurch gekennzeichnet, dass** bei der Bestimmung (41) von Abhängigkeiten (33) eine Extraktion (42) von Abhängigkeiten, eine zweite Gruppierung (43) von Messdaten (9) sowie eine Auswertung (44) der Gruppierung durchgeführt wird.

10. Verfahren nach einem der Ansprüche 1 bis 9, **dadurch gekennzeichnet, dass** die Bestimmung von Anomalien unter Nutzung von in dem Anlagenschema (18) hinterlegten Konfidenzintervallen für die Sensoren (6) erfolgt.

11. Verfahren nach einem der Ansprüche 1 bis 10, **dadurch gekennzeichnet, dass** die Messdaten (9) zeitlich synchronisiert und über mehrere Tage in einem Ringspeicher abgespeichert werden.

12. Verfahren nach einem der Ansprüche 1 bis 11, **dadurch gekennzeichnet, dass** eine Gruppierung der Messdaten (9) erfolgt und derart Messdaten (9), welche außerhalb eines zulässigen Toleranzbereichs liegen, eliminiert werden.

13. Verfahren nach einem der Ansprüche 1 bis 12, **dadurch gekennzeichnet, dass** das Verfahren kontinuierlich durchgeführt wird, wobei eine Aktualisierung der Parameter (31, 32, 33) erfolgt.

14. Verfahren nach einem der Ansprüche 1 bis 13, **dadurch gekennzeichnet, dass** das Verfahren in einem lokalen Energiemanagementsystem (1a) oder in einem übergeordneten Energiemanagementsystem (1b) eingesetzt wird.

## Claims

1. A method for calculating parameters of one or more energy conversion systems (2), which determines parameters of one or more energy conversion systems (2) from continuously collected measurement data (9) and stores them in a system model (46), **characterised in that** measurement data (9) are collected by means of sensors (6) and assigned to measurement points in a step of measurement data assignment (17) and, after a first signal preprocessing operation (19), in which anomalies are detected, only plausible measurement data (9) are stored in a memory (22), **in that** the stored measurement data (9) are subjected to a second signal preprocessing operation (24) in which state changes are detected (27) and state changes are analysed (30) by means of correlation, and in which state change curves (34) with their measurement data (9) are generated, **in that** subsequently, on the basis of the state change curves (34) with their measurement data (9), steady-state parameters (31) are determined (47), transient parameters (32) are determined (38), and dependencies (33) are determined (41), wherein steady-state parameters (31) are rated powers for all energy interfaces, switching steps for all energy interfaces, a minimum dwell time in the switched-on state, a minimum dwell time in the switched-off state, and a power fluctuation for an energy interface to be marketed, wherein transient parameters (32) are startup time constants, shutdown time constants or a generated energy in a startup and shutdown process for all energy interfaces, and wherein dependencies (33) are a dependency of a power fluctuation on external influencing variables, times with disabled operation, times and limit values for overnight shutdown in thermal engineering systems or limit values for switching on and off during autonomous operation.

2. The method according to Claim 1, **characterised in that** the measurement data (9) are assigned to measurement points using a system diagram (18).

3. The method according to Claim 1 or 2, **characterised in that** an anomaly detection (20) and a statistical assessment (21) are carried out during the first signal preprocessing operation (19).

4. The method according to one of Claims 1 to 3, **characterised in that** the determined steady-state parameters (31), transient parameters (32) and dependencies (33) are fed to a parameter checking operation (45), and valid parameters (31, 32, 33) are subsequently stored in the system model (46), which describes the properties of an energy conversion system (2).

5. The method according to one of Claims 1 to 4, **characterised in that** a signal analysis (23) and an encoding (26) of state changes (25) of the measurement data (9) are carried out during the detection (27) of state changes.

6. The method according to one of Claims 1 to 5, **characterised in that** a correlation determination (28) and an assessment (29) of the correlation are carried out during the analysis (30).

7. The method according to one of Claims 1 to 6, **characterised in that** an extraction (35) of steady-state measurement data curves, a first grouping (36) and a statistical evaluation (37) are carried out during the determination (47) of steady-state parameters (31).

8. The method according to one of Claims 1 to 7, **characterised in that** an extraction (39) of transient measurement value curves and a rule-based evaluation (40) are carried out during the determination (38) of transient parameters (32).

9. The method according to one of Claims 1 to 8, **characterised in that** an extraction (42) of dependencies, a second grouping (43) of measurement data (9) and an evaluation (44) of the grouping are carried out during the determination (41) of dependencies (33).

10. The method according to one of Claims 1 to 9, **characterised in that** anomalies are determined using confidence intervals, which are stored in the system diagram (18), for the sensors (6).

11. The method according to one of Claims 1 to 10, **characterised in that** the measurement data (9) are synchronised in time and stored over multiple days in a circular buffer.

12. The method according to one of Claims 1 to 11, **characterised in that** the measurement data (9) are grouped, and measurement data (9) that lie outside a permissible tolerance range are thus eliminated.

13. The method according to one of Claims 1 to 12, **characterised in that** the method is carried out continuously, wherein the parameters (31, 32, 33) are updated.

14. The method according to one of Claims 1 to 13, **characterised in that** the method is used in a local energy management system (1a) or in a higher-level energy management system (1b).

## Revendications

1. Procédé pour déterminer des paramètres d'une ou plusieurs installations de transformation énergétique (2), qui détermine les paramètres d'une ou plusieurs installations de transformation énergétique (2) en continu à partir de données de mesure (9) à l'aide de capteurs (6) et les mémorise dans un modèle d'installation (46). À travers une étape d'affectation des données de mesure (17) à des points de mesure et un premier prétraitement de signal (19) qui détecte les anomalies, seules des données de mesure plausibles (9) sont stockées dans une mémoire (22). Les données de mesure mémorisées (9) sont soumises à un deuxième prétraitement de signal (24) qui détecte (27) les changements d'état et les analyse (30) par corrélation. À l'aide de cette corrélation, des courbes de changement d'état (34) sont produites avec leurs données de mesure (9). En se basant sur les trajectoires de changement d'état (34) et leurs données de mesure (9), des paramètres stationnaires (31) sont déterminés (47), des paramètres transitoires (32) sont déterminés (38) et des contraintes (33) sont déterminées (41). Les paramètres stationnaires (31) comprennent les puissances nominales pour toutes les interfaces énergétiques, les niveaux de commutation pour toutes les interfaces énergétiques, le temps de rétention minimal en état activé, le temps de rétention minimal en état désactivé ainsi que la fluctuation de puissance pour une interface énergétique à commercialiser. Les paramètres transitoires (32) comprennent les constantes de temps de démarrage, les constantes de temps d'arrêt ou l'énergie produite durant le processus de démarrage et d'arrêt pour toutes les interfaces énergétiques. Les contraintes (33) comprennent la contrainte inhérente à la fluctuation de puissance par rapport aux grandeurs d'influence externes, les temps avec un fonctionnement bloqué, les temps et les valeurs limites pour une coupure nocturne des installations thermiques ou les valeurs limites en cas d'allumage et d'arrêt en mode autonome.

2. Selon la revendication 1, procédé **caractérisé par** l'affectation des données de mesure (9) à des points de mesure au moyen d'un schéma d'installation (18).

3. Selon la revendication 1 ou 2, procédé **caractérisé,** lors du premier prétraitement de signal (19, par une détection d'anomalies (20) et une évaluation statistique (21).

4. Selon l'une quelconque des revendications 1 à 3, procédé **caractérisé par le fait que** les paramètres stationnaires (31), les paramètres transitoires (32) et les contraintes (33) déterminés sont soumis à un contrôle de paramètres (45) et que les paramètres (31, 32, 33) valides qui en découlent sont mémorisés dans le modèle d'installation (46), qui présente les caractéristiques d'une installation de transformation énergétique (2).

5. Selon l'une quelconque des revendications 1 à 4, procédé **caractérisé,** lors de la détection (27) de changements d'état, par une analyse de signal (23) et un codage (26) des changements d'état (25) des données de mesure (9).

6. Selon l'une quelconque des revendications 1 à 5, procédé **caractérisé,** lors de l'analyse (30), par une détermination (28) et une évaluation (29) de la corrélation.

7. Selon l'une quelconque des revendications 1 à 6, procédé **caractérisé,** lors de la détermination (47) des paramètres stationnaires (31), par une extraction (35) des courbes de données de mesure stationnaires, un premier regroupement (36) ainsi qu'une évaluation statistique (37).

8. Selon l'une quelconque des revendications 1 à 7, procédé **caractérisé,** lors de la détermination (38) des paramètres transitoires (32), par une extraction (39) d'historiques de valeurs transitoires mesurées et une évaluation (40) basée sur des règles.

9. Selon l'une quelconque des revendications 1 à 8, procédé **caractérisé,** lors de la détermination (41) des contraintes (33), par une extraction (42) de contraintes, un deuxième groupement (43) de données mesurées (9) et une évaluation (44) du groupement.

10. Selon l'une quelconque des revendications 1 à 9, procédé **caractérisé par** la détermination d'anomalies au moyen d'intervalles de confiance pour les capteurs (6) enregistrés dans le schéma d'installation (18).

11. Selon l'une quelconque des revendications 1 à 10, procédé **caractérisé par** la synchronisation dans le temps des données de mesure (9) et leur stockage pendant plusieurs jours dans un buffer circulaire.

12. Selon l'une quelconque des revendications 1 à 11, procédé **caractérisé par** le groupement des données de mesure (9) et la suppression des données de mesure (9) qui se trouvent en dehors d'une plage de tolérance.

13. Selon l'une quelconque des revendications 1 à 12, procédé **caractérisé par** sa mise en œuvre de manière continue et la mise à jour des paramètres (31, 32, 33).

14. Selon l'une quelconque des revendications 1 à 13, procédé **caractérisé par** sa mise en œuvre dans un système de gestion d'énergie local (1a) ou dans un système de gestion d'énergie supérieur (1b).
